# EUROPEAN PATENT SPECIFICATION

(11) **EP 2 678 374 B1**
(45) Date of publication and mention of the grant of the patent: **21.01.2015**
(21) Application number: 12704852.8
(22) Date of filing: 23.02.2012
(51) Int. Cl.: C08G 65/00

(54) **PROCESS FOR THE PREPARATION OF POLYETHER POLYOLS**
VERFAHREN ZUR HERSTELLUNG EINES POLYETHERPOLYOLS
PROCÉDÉ POUR LA PRÉPARATION DE POLYÉTHER POLYOLS

(30) Priority: 24.02.2011 EP 11155825
(43) Date of publication of application: 01.01.2014
(73) Proprietor: Shell Internationale Research Maatschappij B.V., 2596 HR Den Haag (NL)
(72) Inventor: ELEVELD, Michiel Barend, NL-1031 HW Amsterdam (NL); HARTEVELD, Wouter Koen, NL-1031 HW Amsterdam (NL); VAN DER HULST, Cornelis Hyacinthus Maria, NL-1031 HW Amsterdam (NL)
(74) Representative: Matthezing, Robert Maarten
(86) International application number: PCT/EP2012/053079
(87) International publication number: WO 2012/113871

(56) References cited:
- EP-A1- 1 568 414
- WO-A1-01/04183
- WO-A1-01/36514
- WO-A1-2004/081082
- US-A- 5 723 094
- US-A1- 2002 198 413
- US-A1- 2005 245 628
- US-A1- 2010 233 775
- P.J. SCOTT, A. PENLIDIS, G.L. REMPEL: "REACTOR DESIGN CONSIDERATIONS FOR GAS-LIQUID EMULSIONS POLYMERIZATIONS. THE ETHYLENE-VINYL ACETATE EXAMPLE", CHEMICAL ENGINEERING SCIENCE, vol. 49, no. 10, 1994, pages 1573-1583, XP002630545,

## Description

### Field of the Invention

The present invention relates to a process for the preparation of a polyether polyol comprising polymerising an alkylene oxide in the presence of a multimetal cyanide complex catalyst and an initiator compound.

### Background of the Invention

A polyether polyol can be used in making polyurethane by reaction with polyisocyanate. While the polyurethane is being formed, it may be foamed, blown or expanded with a gas such as carbon dioxide, into a polyurethane foam having a certain cell structure. In case water is used as the blowing agent, carbon dioxide is produced by reaction of the water with polyisocyanate. Alternatively, carbon dioxide can be injected into the reaction mixture. Where liquid carbon dioxide is injected, expansion occurs through vapourisation of the carbon dioxide.

It is known to prepare polyether polyols by reaction of an initiator compound with one or more alkylene oxides, in the presence of a multimetal cyanide complex catalyst. Such catalysts are highly active in the preparation of polyether polyols by this method and can be used in either batch or continuous processes. In these processes, the one or more alkylene oxides are generally added to a mixture of the multimetal cyanide complex catalyst and the intitiator.

Due to the activity of the catalyst, care must be taken in order to ensure that the one or more alkylene oxides are adequately mixed with the mixture of the initiator and catalyst on addition, in order to obtain a relatively narrow molecular weight distribution of the polyol product.

The article entitled 'Bayer makes an Impact' as published in European Chemical News, 22-28 May 2000, no. 10, discloses a process for producing polyether polyols from starter, ethylene oxide (EO) and propylene oxide (PO) in the presence of a zinc cyanocobaltate catalyst. Said publication includes a flow scheme for the process, according to which EO and PO (and the starter and catalyst) are added via an external circulation tube (loop) and not directly into the reactor itself. The reaction mixture is continuously circulated through the reactor and the loop.

According to the flow scheme included in said publication, EO and PO (and the starter and catalyst) are added at a point located behind a heat exchanger as arranged in the loop, as seen in the direction of the circulation flow of reaction mixture which direction, outside the reactor, is upward. In addition, a pump is arranged in the loop at a location in front of the heat exchanger, as seen in the direction of the circulation flow of reaction mixture.

A similar process is disclosed in Research Disclosure 525054 (January 2008), which describes a process for the preparation of a polyether polyol, said process comprising polymerising an alkylene oxide (such as EO and/or PO) in the presence of a multimetal cyanide complex catalyst and an initiator compound, wherein the process is carried out in a loop reactor which is a reactor provided with an external circulation tube, and at least part, preferably all, of the alkylene oxide is added via the external circulation tube, at a point between a heat exchanger and a pump, which pump is arranged in the loop at a location in front of the heat exchanger, as seen in the direction of the circulation flow of reaction mixture.

US 5,723,094 describes a chemical reactor and a process for producing chemical products in which a plurality of flow tubes in a shell are used for a reaction and capillary tubelets containing a plurality of apertures within and along the length of each flow tube are used to introduce a second reactant to the first reactant, which is present in the flow tubes. The reactor and process is taught as suitable for use in the preparation of polyoxyalkylene polyethers using double metal cyanide catalysts.

The present inventors have sought to provide a process and a reactor system for the preparation of a polyether polyol in which mixing of alkylene oxide with an initiator and catalyst is achieved in a simple and robust manner allowing production of a polyol product with a relatively narrow molecular weight distribution and a low end product viscosity.

### Summary of the Invention

Accordingly, the present invention provides a process for the preparation of a polyether polyol, said process comprising polymerising one or more alkylene oxides in the presence of a multimetal cyanide complex catalyst and an initiator compound, wherein the process is carried out in a reactor vessel equipped with means for agitating its contents and the one or more alkylene oxides are supplied to an agitated mixture comprising the multimetal cyanide complex catalyst and the initiator via a feed inlet device, said feed inlet device comprising a sparger, wherein the agitating means comprises one or more impellers or wherein the agitating means comprises a jet of the reaction mixture.

### Brief Description of the Drawings

Figure 1 illustrates a reactor system for use in the present invention.

### Detailed Description of the Invention

The present invention provides a process for preparing a polyether polyol from one or more alkylene oxides and an initiator in the presence of a multimetal cyanide complex catalyst in which the one or more alkylene oxides is added to a mixture of the initiator and the catalyst by means of a sparger.

Herein it is also described a reactor system suitable for use in such a process.

Preferably, the one or more alkylene oxides is/are selected from the group consisting of ethylene oxide, propylene oxide, butylenes oxide and mixture thereof.

Initiator compounds suitable for use in the present process may be compounds having from 2 to 6 active hydrogen atoms. The active hydrogen atoms are typically present in the form of hydroxyl groups, but may also be present in the form of e.g. amine groups. Suitable initiator compounds include water and alcohols containing at least two active hydrogen atoms available for reaction with alkylene oxide per molecule. Suitable aliphatic initiator compounds include polyhydric alcohols containing in the range of from 2 to 6 hydroxyl groups per molecule. Suitable aromatic compounds include aromatic alcohols containing at least two active hydrogen atoms available for reaction with alkylene oxide per molecule. Examples of such initiator compounds are water, diethylene glycol, dipropylene glycol, glycerol, di- and polyglycerols, pentaerythritol, trimethylolpropane, triethanolamine, sorbitol, mannitol, 2, 2'-bis(4-hydroxyphenyl)propane (bisphenol A), 2,2'-bis(4-hydroxylphenyl)butane (bisphenol B) and 2,2'-bis(4-hydroxylphenyl)methane (bisphenol F). Preferred are aliphatic alcohols containing at least two, more preferably at least 3 active hydrogen groups in the form of hydroxyl groups per molecule. Preferably the aliphatic alcohols contain at most 5, more preferably at most 4 and most preferably at most 3 hydroxyl groups per molecule.

The multimetal cyanide complex catalyst to be used in the present process suitably comprises a dimetal cyanide (DMC) complex. Catalysts comprising DMC complexes usually require activating by contacting them with an alkylene oxide, upon which activation they are active as catalysts for the subject process. This activation can be done prior to or in an initial start-up phase of the subject process.

Any dimetal cyanide complex catalyst which is useful for the preparation of polyether polyols can be used for the present process, provided that once activated the catalyst is sufficiently active in catalysing the polymerisation of the alkylene oxide. Processes by which the dimetal cyanide complex catalyst, for use in the present invention, can be prepared have been described in the art, for instance in JP-A-4-145,123.

Generally, a dimetal cyanide complex catalyst useful for the present process comprises a bimetallic cyanide complex coordinated to an organic ligand. Such a bimetallic cyanide complex is usually prepared by mixing together aqueous solutions, or solutions in water and an organic solvent of a metal salt, preferably a salt of Zn(II) or Fe(II), and a polycyanometal complex, preferably containing Fe(III) or Co(III), and bringing the organic ligand, for instance tertiary butanol, into contact with the thus obtained bimetallic cyanide complex and removing the surplus solvent ligand. The dimetal cyanide complex catalyst can then be dried to a powder, which allows stable storage.

Preferably, due to high proven activity and simple handling, the catalyst is prepared according to WO-A-01/72418 as a dispersion in a combination of a low molecular weight polyol telomer and catalyst.

The amount of the catalyst to be used depends largely on the functionality of the initiator and the desired functionality and molecular weight of the polyether polyol.

Generally, the amount of catalyst used is in the range of from 2 ppmw to 250 ppmw calculated on the weight of the obtained product, preferably in the range of from 5 ppmw to 150 ppmw, more preferably in the range of from 7 to 95 ppmw and most preferably in the range of from 8 to 40 ppmw.

It is envisaged that the catalyst may be a fixed catalyst or a suspended (or dispersed) catalyst. In the case of a suspended catalyst, the catalyst may have been applied on an inert catalyst support.

The process of the present invention may be carried out at any suitable temperature, for example in a range of from 60 to 180 °C, preferably at a temperature of at least 80 °C, more preferably at least 95 °C, and most preferably at least 100 °C. The temperature is preferably at most 150 °C, more preferably at most 140 °C and most preferably at most 130 °C.

The process of the present invention is typically carried out at atmospheric pressure. Higher pressures may also be applied, but the pressure will usually not exceed 2000 kPa and preferably is from 100 to 500 kPa.

The present process may be operated in a batch, semi-continuous (or semi-batch) or continuous mode.

In the semi-continuous (or semi-batch) mode, first the catalyst and initiator compound are added to the reactor. Then the addition of the alkylene oxide is started. After completion of the addition of the alkylene oxide, there is an after-reaction time.

In the continuous mode, initiator compound, alkylene oxide and catalyst are continually fed into, and the obtained polyether polyol are continually removed from, the reactor vessel.

The reactor vessel may be any suitable vessel known in the art. Typically, it will comprise a tank reactor.

The reactor vessel will suitably be equipped with an inlet tube, typically towards the top of the reactor. Said inlet tube will be suitable for the addition of initiator and catalyst to the reactor vessel. The reactor vessel will also be equipped with an outlet tube for removing material from the reactor system. Said outlet tube will typically be situated towards the bottom of the reactor vessel.

In a preferred embodiment, the reactor system will also comprise a recycle loop in which material will be removed from, preferably the bottom of, the reactor, optionally subjected to heating or cooling, and returned to the reactor vessel via a second inlet device, preferably situated near the top of the reactor vessel. A stream may be separated from the reactor loop for further processing and/or purification of the material therein. If a recycle loop is present, the outlet tube may form part or be separate to the recycle loop.

The reactor vessel is equipped with means for agitating its contents, wherein the agitating means comprises one or more impellers or wherein the agitating means comprises a jet of the reaction mixture. In one embodiment of the invention, the agitating means comprises one or more, preferably two or more, impellers. Preferably, two or more impellers are arranged vertically within the reactor vessel. Such impellers will preferably rotate around a single axis in the centre of the reactor vessel.

In another embodiment of the present invention, the agitating means comprises a fast-moving stream or jet of the reaction mixture. Preferably, said jet will be formed by an injector nozzle which comprises the second inlet device of the recycle loop and the material to be returned to the reactor will be passed through the injector nozzle and thus be returned to the reactor vessel as a jet at high velocity. In this embodiment, the second inlet device or injector nozzle is preferably positioned at the top of the reactor vessel and is aligned so as to provide a jet pointing directly downwards.

With any suitable agitating means, baffles, breaking plates and other related devices may be present on the inside of the reactor vessel to further break up the flow of the reaction mixture and to improve its mixing. Preferably, when a jet is used as agitating means, a breaker plate is present at a point in the vessel directly in the path of the flow from the jet. Suitably said breaker plate is at the bottom of the reactor.

In the present invention, the one or more alkylene oxides are supplied to a mixture comprising the multimetal cyanide complex catalyst and the initiator compound via a feed inlet device comprising a sparger. Suitably, the sparger is a device comprising substantially equally spaced outlet openings or holes located along its surface.

The sparger is equipped with an inlet conduit or pipe which supplies the one or more alkylene oxides to the sparger at a point inside the reactor.

The sparger may be any shape or configuration and the choice of shape or configuration will depend on the shape or configuration of the reactor vessel with which it is situated. Typically, for a reactor vessel with a substantially circular cross-section, the sparger will also be substantially circular. Preferably, the sparger will be in the form of a ring. More preferably, the sparger will comprise a plurality of concentric ring passageways.

The sparger is preferably positioned in the reactor vessel at a point of considerably turbulent flow of the reactor contents. For example, the sparger may advantageously be positioned such that an inlet flow from one or more (preferably all) holes of the sparger intersects or meets with a reactor flow produced by the agitating means. Such intersection between an inlet flow and a reactor flow produced by agitation means (e.g. one or more impellers and/or a jet) leads to enhanced mixing on account of increased shear. The flows may intersect at any suitable angle; preferably the flows may intersect substantially orthogonally.

In the embodiment that the agitating means is one or more impeller, the sparger is suitably situated directly above an impeller. Preferably, the sparger is situated directly above the bottom of two or more impellers. In this embodiment it is preferred that the holes in the sparger are all on the downward side of the sparger, with the flow from the holes being directed toward the impeller over which the sparger is situated.

In other embodiments of the invention, the holes may be present on any side of the sparger. When the agitating means is a jet, it is preferred that the holes are evenly distributed along the bottom and sides of the sparger.

In a preferred embodiment of the present invention, the holes in the sparger are circular and have a diameter in the range of at least 1.5 mm, preferably at least 2.0 mm. Preferably, the diameter of the holes is at most 5.0 mm, more preferably, the diameter of the holes is at most 4.0 mm, even more preferably at most 3.0 mm.

The number of holes present in the sparger will depend on the size of the reactor and the pressure of the supply of alkylene oxides. For a typical (for example,in the range of from 25 to 75 tonne of reactor content) reactor, it is suitable for there to be in the range of from 30 to 200 holes in the sparger, more preferably at least 50, most preferably at least 65, more preferably at most 150, most preferably at most 125.

The pressure drop across the holes must be high enough to provide a high velocity of the material exiting the sparger and to ensure adequate mixing with the mixture comprising the initiator compound and the catalyst.

### Detailed Description of the Drawings

Figure 1 illustrates one embodiment of a reactor system suitable for the present invention.

A reactor vessel (1) is equipped with two or more impellers (2). Initiator and catalyst are added to the reactor vessel via an inlet tube (3). Reaction material is removed from the reactor vessel via an outlet tube (4). A stream (5) is separated from this material for further processing and/or purification. The remainder of the removed material is recycled via a recycle loop (6) and returned to the reactor vessel via a second inlet device (7). Alkylene oxide(s) (8) is supplied to the reactor vessel via an inlet conduit (9) connected to a sparger (10), which is positioned directly above the lower impeller.

### Examples

Theoretical calculations were carried out to model Lagrangian mixing times for different alkylene oxide injection methods.

As comparative examples, the Lagrangian times for the mixing of propylene oxide into a reaction mixture comprising mainly polyols using a single or three nozzles (with 3 bar differential pressure) were calculated. The required times calculated for 95% mixing were 0.12 seconds (3 nozzles, 8.9 mm) and 0.2 seconds (1 nozzle, 15mm).

As an example of the invention, the same calculations were carried out on the use of a sparger (100 orifices of 2.5mm, differential pressure of 0.4 bar or less). The time calculated to be required for 95% mixing for this example was 0.03 seconds.

The reduced mixing time required when using a sparger will result in a faster and more thorough degree of mixing. Such improved mixing can lead to material with a narrower molecular weight distribution and, therefore, a lower viscosity.

## Claims

1. A process for the preparation of a polyether polyol, said process comprising polymerising one or more alkylene oxides in the presence of a multimetal cyanide complex catalyst and an initiator compound, wherein the process is carried out in a reactor vessel equipped with means for agitating its contents and the one or more alkylene oxides are supplied to an agitated mixture comprising the multimetal cyanide complex catalyst and the initiator via a feed inlet device, said feed inlet device comprising a sparger, wherein the agitating means comprises one or more impellers or wherein the agitating means comprises a jet of the reaction mixture.

2. A process as claimed in claim 1, wherein the one or more alkylene oxides are selected from the group consisting of ethylene oxide, propylene oxide, butylenes oxides and mixtures thereof.

3. A process as claimed in claim 1 or claim 2, wherein the initiator compound is a compound having from 2 to 6 active hydrogen atoms.

4. A process as claimed in any preceding claim, wherein the sparger is in the form of a ring.

5. A process as claimed in claim 4, wherein the sparger comprises a plurality of concentric ring passageways.

6. A process as claimed in any preceding claim wherein the means for agitating comprise a drive for imparting mixing energy to the reactor contents.

7. A process as claimed in any preceding claim wherein the sparger is positioned such that an inlet flow from one or more holes of the sparger intersects or meets with a reactor flow produced by the means for agitating.

8. A process as claimed in claim 1, wherein the agitating means comprises one or more impellers and wherein the sparger is positioned directly above the lowest of the one or more impellers.

## Patentansprüche

1. Verfahren zur Herstellung eines Polyetherpolyols, bei dem man ein oder mehrere Alkylenoxide in Gegenwart eines Multimetallcyanidkomplex-Katalysators und einer Starterverbindung polymerisiert, wobei das Verfahren in einem Reaktorgefäß, das mit einem Mittel zum Rühren seines Inhalts ausgestattet ist, durchgeführt wird und das eine bzw. die mehreren Alkylenoxide über eine Einsatzstoff-Einlassvorrichtung einer gerührten Mischung, die den Multimetallcyanidkomplex-Katalysator und den Starter umfasst, zugeführt werden, wobei die Einsatzstoff-Einlassvorrichtung eine Begasungseinrichtung umfasst, wobei das Rührmittel einen oder mehrere Impeller umfasst oder wobei das Rührmittel einen Strahl der Reaktionsmischung umfasst.

2. Verfahren nach Anspruch 1, bei dem man das eine bzw. die mehreren Alkylenoxide aus der Gruppe bestehend aus Ethylenoxid, Propylenoxid, Butylenoxiden und Mischungen davon auswählt.

3. Verfahren nach Anspruch 1 oder Anspruch 2, bei dem es sich bei der Starterverbindung um eine Verbindung mit 2 bis 6 aktiven Wasserstoffatomen handelt.

4. Verfahren nach einem der vorhergehenden Ansprüche, bei dem die Begasungseinrichtung ringförmig ist.

5. Verfahren nach Anspruch 4, bei dem die Begasungseinrichtung mehrere konzentrische Ringdurchgänge umfasst.

6. Verfahren nach einem der vorhergehenden Ansprüche, bei dem das Rührmittel einen Antrieb zum Übertragen von Mischenergie auf den Reaktorinhalt umfasst.

7. Verfahren nach einem der vorhergehenden Ansprüche, bei dem die Begasungseinrichtung so positioniert ist, dass ein Einlassstrom aus einem oder mehreren Löchern der Begasungseinrichtung einen durch das Rührmittel erzeugten Reaktorstrom schneidet oder damit zusammentrifft.

8. Verfahren nach Anspruch 1, bei dem das Rührmittel einen oder mehrere Impeller umfasst und wobei die Begasungseinrichtung direkt oberhalb des untersten des einen bzw. der mehreren Impeller positioniert ist.

## Revendications

1. Procédé de préparation d'un polyéther polyol, ledit procédé comprenant la polymérisation d'un ou de plusieurs oxydes d'alkylène en présence d'un catalyseur à base d'un complexe de cyanure de plusieurs métaux et d'un composé initiateur, dans lequel le procédé est réalisé dans une cuve de réaction équipée de moyens pour l'agitation de son contenu et le ou les oxydes d'alkylène sont introduits dans un mélange agité comprenant le catalyseur à base d'un complexe de cyanure de plusieurs métaux et l'initiateur par un dispositif à entrée d'alimentation, ledit dispositif à entrée d'alimentation comprenant un arroseur, le moyen d'agitation comprenant une ou plusieurs hélices ou le moyen d'agitation comprenant un jet du mélange réactionnel.

2. Procédé selon la revendication 1, dans lequel le ou les oxydes d'alkylène sont choisis dans le groupe constitué par l'oxyde d'éthylène, l'oxyde de propylène, les oxydes de butylène et leurs mélanges.

3. Procédé selon la revendication 1 ou la revendication 2, dans lequel le composé initiateur est un composé contenant 2 à 6 atomes d'hydrogène actifs.

4. Procédé selon l'une quelconque des revendications précédentes, dans lequel l'arroseur est sous la forme d'un anneau.

5. Procédé selon la revendication 4, dans lequel l'arroseur comprend une pluralité de passages annulaires concentriques.

6. Procédé selon l'une quelconque des revendications précédentes, dans lequel le moyen d'agitation comprend un entraînement pour transmettre une énergie de mélange au contenu du réacteur.

7. Procédé selon l'une quelconque des revendications précédentes, dans lequel l'arroseur est positionné de sorte qu'un courant d'entrée issu d'un ou de plusieurs orifices de l'arroseur coupe ou rencontre un courant du réacteur produit par le moyen d'agitation.

8. Procédé selon la revendication 1, dans lequel le moyen d'agitation comprend une ou plusieurs hélices et dans lequel l'arroseur est positionné directement au-dessus de la plus basse des hélices.
